# EUROPÄISCHE PATENTSCHRIFT

(11) **EP 2 640 559 B1**
(45) Veröffentlichungstag und Bekanntmachung des Hinweises auf die Patenterteilung: **11.01.2017**
(21) Anmeldenummer: 11827786.2
(22) Anmeldetag: 14.11.2011
(51) Int. Cl.: B29B 11/16, B29C 51/00, D02G 3/40

(54) **HYBRIDGARN, VERFAHREN ZUR HERSTELLUNG VON FASER-PREFORMS FÜR FASERVERBUNDBAUTEILE, INSBESONDERE HOCHLEISTUNGSFASERVERBUNDBAUTEILE, UNTER VERWENDUNG DESSELBEN SOWIE VERFAHREN ZUR HERSTELLUNG VON FASERVERBUNDBAUTEILEN, INSBESONDERE HOCHLEISTUNGSFASERVERBUNDBAUTEILEN**
HYBRID YARN, METHOD FOR THE PRODUCTION OF FIBER PREFORMS FOR FIBER COMPOSITE COMPONENTS, IN PARTICULAR HIGH-STRENGTH FIBER COMPOSITE COMPONENTS, USING SAID HYBRID YARN, AND METHOD FOR THE PRODUCTION OF FIBER COMPOSITE COMPONENTS, IN PARTICULAR HIGH-STRENGTH FIBER COMPOSITE COMPONENTS
FIL HYBRIDE, PROCÉDÉ DE PRODUCTION DE PRÉFORMES DE FIBRES POUR DES ÉLÉMENTS DE CONSTRUCTION COMPOSITES RENFORCÉS PAR DES FIBRES, NOTAMMENT DES ÉLÉMENTS DE CONSTRUCTION COMPOSITES RENFORCÉS PAR DES FIBRES À HAUTE PERFORMANCE À L'AIDE DUDIT FIL HYBRIDE ET PROCÉDÉ DE PRODUCTION D'ÉLÉMENTS DE CONSTRUCTION COMPOSITES RENFORCÉS PAR DES FIBRES, NOTAMMENT DES ÉLÉMENTS DE CONSTRUCTION COMPOSITES RENFORCÉS PAR DES FIBRES À HAUTE PERFORMANCE À L'AIDE DUDIT FIL HYBRIDE

(30) Priorität: 18.11.2010 DE 102010052078
(43) Veröffentlichungstag der Anmeldung: 25.09.2013
(73) Patentinhaber: Faserinstitut Bremen E.V., 28359 Bremen (DE)
(72) Erfinder: SCHIEBEL, Patrick, 28205 Bremen (DE); BOSTAN, Lars, 28213 Bremen (DE)
(74) Vertreter: Manasse, Uwe
(86) Internationale Anmeldenummer: PCT/DE2011/001984
(87) Internationale Veröffentlichungsnummer: WO 2012/065598

(56) Entgegenhaltungen:
- EP-A2- 0 737 763
- GB-A- 2 105 247
- JP-A- 4 353 525
- JP-A- 6 335 973
- JP-A- 63 249 631
- US-A1- 2006 110 597

## Beschreibung

Die vorliegende Erfindung betrifft ein Hybridgarn, insbesondere geeignet zur Thermofixierung von Faser-Preforms für, vorzugsweise endlosfaserverstärkte, Faserverbundbauteile, insbesondere Hochleistungsfaserverbundbauteile, ein Verfahren zur Herstellung von Faser-Preforms für, vorzugsweise endlosfaserverstärkte, Faserverbundbauteile, insbesondere Hochleistungsfaserverbundbauteile, und ein Verfahren zur Herstellung von, vorzugsweise endlosfaserverstärkten, Faserverbundbauteilen, insbesondere Hochleistungsfaserverbundbauteilen. Der Faser-Preform ist ein Produkt oder Halbzeug, das aus Fasern aufgebaut ist. Die Tragschicht kann zum Beispiel aus einem Werkzeug, einer Folie, einer Faserstruktur oder einem Laminat bestehen. Hochleistungsfaserverbundbauteile sind Faserverbundbauteile mit besonders guten thermischen und mechanischen Eigenschaften.

In der gesamten Verkehrstechnik, der Luft- und Raumfahrttechnik, auf den Gebieten des Maschinenbaus und im Sportbereich bestehen verstärkt Forderungen nach Leichtbaulösungen. Wo Massen bewegt werden, ist Leichtbau eine effiziente Methode, um die Leistungsfähigkeit des Produktes zu erhöhen und gleichzeitig die erforderliche Energie im Betrieb und somit die laufenden Kosten zu reduzieren. Kohlenstofffaserverstärkte Kunststoffe (CFK) besitzen ein hohes Leichtbaupotenzial, da sie bei einer geringen Dichte eine hohe spezifische Festigkeit und Steifigkeit aufweisen. Der Einsatz von Strukturen aus CFK in Großserien scheitert jedoch häufig an ihren Herstell- und Materialkosten. Um Bauteile aus diesem Werkstoff zu konkurrenzfähigen Kosten fertigen zu können, muss der Herstellprozess weitgehend automatisiert sein und eine geringe Zykluszeit aufweisen. Weiterhin müssen die Materialkosten minimiert und dabei alle mechanischen, thermischen und chemischen Anforderungen erfüllt werden.

Matrizes aus Thermoplasten weisen Vorteile gegenüber Duroplasten auf. Sie sind bei Raumtemperatur unbegrenzt haltbar, bei der Verarbeitung müssen keine Lösemittel eingesetzt werden, die Zykluszeiten sind kürzer, die Materialien sind schweißbar und durch eine höhere Zähigkeit als Duromere belastungstoleranter. Endlose Kohlenstofffasern in thermoplastischen Matrizes werden heute in Gewebeform zu sogenannten Organoblechen verarbeitet. Der Herstellprozess umfasst mehrere Arbeitsschritte. So müssen zuerst (0°/90°)-Gewebe hergestellt werden. Die für den Webprozess erforderliche Schlichte zum Schutz der Fasern wird vor der Imprägnierung mit den aufgeschmolzenen Thermoplasten durch ein nasschemisches Verfahren entfernt. Anschließend werden die getrockneten Gewebe mit der Thermoplastschmelze oder über die Film-stacking-Methode imprägniert. Die Matrix hat eine sehr hohe Viskosität von 10³ bis 10⁵ Pa·s (Wasser 1 mPa · s bei 20°C). Um eine gute Imprägnierung aller Fasern sicherzustellen, werden nach der Tränkung die einzelnen Gewebe zu Laminaten aufgebaut und mittels einer Doppelband- oder Intervall-Heißpresse konsolidiert. Die Laminate der Organobleche können bis zu einer Dicke von 10 mm aufgebaut und in einem Umformprozess zu Bauteilen verarbeitet werden.

Nachteilig erweisen sich hierbei der aufwendige Herstellprozess und die teuren Ausgangsmaterialien. Aus diesem Grund ist der Anwendungsbereich bisher überwiegend auf einzelne Baugruppen in der Luftfahrt beschränkt.

Im Vergleich zu Organoblechen kann durch den Einsatz von Hybridgarnen und -textilien eine kürzere Fertigungskette erreicht werden. Um kurze Fließwege und eine damit verbundene schnelle Imprägnierung der Verstärkungsfasern mit der thermoplastischen Matrix sicherzustellen, muss die Matrix so nahe wie möglich an die Filamente gebracht werden. Hybride Textilstrukturen, welche neben den endlosen Verstärkungsfasern aus zum Beispiel Kohlenstoff mit einer thermoplastischen Komponente für die Konsolidierung ausgestattet sind, lassen sich leicht zu Faserverbundbauteilen verarbeiten. Bei Commingling-Hybridgarnen sind beide Komponenten im Garnquerschnitt gut durchmischt, so dass die Fließwege zur Filamentbenetzung während der Konsolidierungsphase minimiert sind. Nachteilig sind jedoch kleine Filamentschädigungen und Orientierungsabweichungen innerhalb des Garns. Die Kohlenstofffilamente werden zusammen mit den Thermoplastfilamenten beispielsweise durch Luftdüsen verwirbelt und liegen anschließend nicht, wie in einem Roving, parallel zueinander und habe damit eine Reduzierung der möglichen Bauteilsteifigkeiten und -festigkeiten zur Folge.

Die belastungsgerechte Auslegung bzw. maximale Werkstoffausnutzung ist Voraussetzung, dass die besonderen Eigenschaftsvorteile der Faserverbundwerkstoffe voll zum Tragen kommen.

Das TFP (Tailored Fibre Placement)-Verfahren bietet ein großes Potenzial für eine effiziente Fertigung von belastungsgerecht ausgelegten Bauteilen aus Faserverbundwerkstoffen. Bei der TFP-Technologie werden Verstärkungsfasern in textilen Preforms kontinuierlich entsprechend den Beanspruchungsrichtungen abgelegt. Somit wird eine annähernd ideale textile Verstärkungsstruktur ermöglicht. Ein Stickautomat positioniert und fixiert die Fasern entsprechend den Kraftfluss- und Spannungsanalysen auf einem Stickgrund (Tragschicht). Durch abgestimmtes Ablegen mehrerer aufgestickter Preforms kann sukzessive ein Halbzeug für ein mehrachsig belastbares Bauteil hergestellt werden. Der Prozess ist hochautomatisiert und ermöglicht eine hohe Produktivität, da mehrere Stickköpfe nebeneinander angeordnet werden, die gleichzeitig auf einem gemeinsamen Stickgrund arbeiten können.

Nachteilig sind Filamentschädigungen durch den Stickprozess, Faserondulationen und Harznester, die durch das Eindringen von Nähfäden entstehen. Zusätzlich gibt es Einschränkungen in der maximalen Lagenanzahl eines TFP-Preforms. Die Weiterverarbeitung zum Bauteil erfolgt häufig in personal- zeitintensiven Harzinjektions- oder Harzinfusionsverfahren, so dass derzeitige Anwendungen auf Bauteile mit geringen Stückzahlen begrenzt sind.

Konventionelle Tow-Placement-Anlagen, wie sie zum Beispiel von Cincinnati und Coriolis Composites angeboten werden, setzen vor allem vorimprägnierte Fasern bzw. Faserbänder ein. Diese können auf thermoplastischen oder duromeren Matrixsystemen beruhen. Es lassen sich Wiederholgenauigkeiten im Weg von +/- 0,3 mm erreichen. Für ausreichendes Anhaften der Fasern sind je nach Matrix Druckkräfte von 100 N bis zu 1500 N erforderlich. Ein robotergeführter Ablegekopf schafft mit einem ¼" breiten Garn eine Ablegeleistung von ca. 18 kg/h. Höhere Ablegeraten können durch eine Parellelisierung erreicht werden.

Untersuchungen an gekrümmten Ablegebahnen haben jedoch gezeigt, dass bei Inplane-Radien von ca. 1,5 m bereits deutliche Faserwelligkeiten auftreten. Belastungsoptimierte Faserausrichtungen für komplexe Spannungsverläufe, wie sie im TFP-Verfahren eingesetzt werden können, sind mit dieser Technologie nicht realisierbar. Grund hierfür ist die hohe Steifigkeit des Faserbandes, welche eine Verschiebung der Filamente zueinander, im Vergleich zu Commingled-Hybridgarnen, nicht ermöglicht.

Im Allgemeinen finden Mantel-Kern-Bikomponenten (BK) (englisch: S/C (Skin Core))-Fasern heute Anwendung in der Bekleidungs- und Möbelindustrie, Filtertechnologie und Medizintechnik. Hierbei kann das Mantel/Kern-Verhältnis je nach Anwendung zwischen 1/99 und 50/50 liegen. Der Einsatz von Bikomponenten-Fasern als Bindefasern ist bereits bei der Vliesherstellung erprobt. Hier werden Mantelkomponenten eingesetzt, die einen niedrigeren Schmelzpunkt als die Kernkomponenten aufweisen und somit direkt thermisch aktiviert werden können. Dies ist für thermisch beanspruchte Bauteile nicht realisierbar, da der Fasermantel auch zur späteren Matrix des Faserverbundbauteiles beiträgt.

Es bleibt daher festzuhalten, dass trotz des hohen technischen Potenzials der faserverstärkten Thermoplaste diese aufgrund des teuren und aufwendigen Fertigungsprozesses für viele Anwendungen bisher nicht genutzt werden können. Beim Einsatz von Organoblechen kommt es oft zu 30% Produktionsabfällen und mehr. Die textilen Faserstrukturen führen oft zu reduzierten Steifigkeiten und Festigkeiten im Bauteil, da es zu fertigungsbedingten Faserschädigungen und Ondulationen im Web- oder Nähprozess kommt. Bestehende Tow-Placement-Verfahren basieren auf teuren Halbzeugen, mit welchen nur große Inplane-Radien verwirklicht werden können. Das Leichtbaupotenzial für Bauteile mit komplexen Spannungsverläufen wird daher nur unzureichend ausgenutzt.

Aus der DE 10 2007 009 124 A1 sind ein induktionsgestütztes Fertigungsverfahren sowie eine Fertigungsvorrichtung für Formkörper aus Faserverbundwerkstoffen bekannt. Das Verfahren umfasst das Ablegen eines bandförmigen Materials in einen Formkörper. Besagtes bandförmiges Material enthält sowohl Verstärkungsfasern als auch thermoplastisches oder duroplastisches Harz. Das Harz ist mit magnetischen Partikeln versetzt, die beim Ablegen zum Erwärmen des bandförmigen Materials durch magnetisches Induktionsheizen führen. Die magnetischen Partikel sind im Harz homogen verteilt, so dass beim Ablegen das gesamte Harz aufgeschmolzen und das bandförmige Material schon in die dreidimensionale Endform gebracht wird. Damit sind ein hoher Anteil des magnetischen Zusatzstoffes, relativ große Ablegeradien sowie ein eingeschränkter Automatisierungsgrad in der Massenfertigung verbunden. US 2006/110597 offenbart ein schnittfestes Hybridgarn aus organischen Verstärkungsfasern und Thermoplastfasern, wobei zumindest einige Thermoplastfaser anteilig ferro und/oder ferrimagnetische Partikel umfassen. GB 2 105 247 A offenbart ein Hybridgarn geeignet zur Thermofixierung umfassend eine Vielzahl von Verstärkungsfasern und eine Vielzahl von Thermoplastfasern.

Der Erfindung liegt somit die Aufgabe zugrunde, eine weitgehend automatisierte, materialsparende und damit wirtschaftliche Fertigung von Faserverbundbauteilen zu ermöglichen.

Erfindungsgemäß wird diese Aufgabe gelöst durch ein Hybridgarn, insbesondere geeignet zur Thermofixierung von Faser-Preforms für, vorzugsweise endlosfaserverstärkte, Faserverbundbauteile, insbesondere Hochleistungsfaserverbundbauteile, umfassend eine Vielzahl von Verstärkungsfasern aus Kohlenstoff oder Glas und eine Vielzahl von Thermoplastfasern, wobei zumindest einige der Vielzahl von Thermoplastfasern zumindest anteilig ferro- und/oder ferrimagnetische Partikel, vorzugsweise im Nanometerbereich, umfassen. Die Partikel dienen zur Erwärmung, wie zum Beispiel Anschmelzen oder komplettes Aufschmelzen, des Thermoplastmaterials des Hybridgams. Vorteilhafterweise weisen die Partikel einen mittleren Durchmesser im Bereich von etwa 10 bis etwa 20 nm und besonders bevorzugt von etwa 13 nm auf. Partikel-Agglomerate weisen eine Ausdehnung vorzugsweise in einem Bereich von etwa 100 bis etwa 200 nm und besonders bevorzugt von etwa 150 nm auf. Besonders bevorzugt sind die Verstärkungsfasern und Thermoplastfasern im gestreckten Zustand und möglichst parallel zueinander angeordnet, d.h. wenig verdreht.

Weiterhin wird diese Aufgabe gelöst durch ein Verfahren zur Herstellung von Faser-Preforms für, vorzugsweise endlosfaserverstärkte, Faserverbundbauteile, insbesondere Hochleistungsfaserverbundbauteile, umfassend: kontinuierliches Zuführen eines Hybridgarns gemäß der Erfindung unter gleichzeitigem Erwärmen desselben in kontinuierlichem Durch- oder Vorbeilauf durch eine magnetische Induktionsheizeinrichtung oder an derselben und nachfolgendes Ablegen des Hybridgarns in einer beliebigen Bahnkurve auf einer, vorzugsweise zweidimensionalen, Tragschicht sowie Fixieren des Hybridgarns durch Erstarrenlassen. Die Tragschicht kann zum Beispiel ein Werkzeug, eine Folie, eine Faserstruktur oder ein Laminat sein.

Darüber hinaus wird diese Aufgabe gelöst durch ein Verfahren zur Herstellung von, vorzugsweise endlosfaserverstärkten, Faserverbundbauteilen, insbesondere Hochleistungsverbundbauteilen, umfassend: kontinuierliches Zuführen eines Hybridgarns gemäß der Erfindung unter gleichzeitigem Erwärmen desselben in kontinuierlichem Durch- oder Vorbeilauf durch eine magnetische Induktionsheizeinrichtung oder an derselben und nachfolgendes Ablegen des Hybridgarns in einer beliebigen Bahnkurve auf einer, vorzugsweise zweidimensionalen, Tragschicht sowie Fixieren des Hybridgarns durch Erstarrrenlassen und Thermoformen des erzeugten Faser-Preforms zur Herstellung eines dreidimensional geformten Faserverbundbauteils.

Bei dem Hybridgarn kann vorgesehen sein, dass die Thermoplastfasern jeweils einen Kern, der ein erstes Material umfasst oder daraus besteht, und einen den Kern umgebenden Mantel, der ein zweites Material umfasst oder daraus besteht, umfassen.

Günstigerweise sind das erste Material und das zweite Material identisch.

Vorteilhafterweise sind die Partikel im Mantel angeordnet.

Vorteilhafterweise weisen die Thermoplastfasern Polyetherketon, insbesondere Polyetheretherketon (PEEK), Polyphenylensulfid (PPS), Polyimid, insbesondere Polyetherimid (PEI), oder Polysulfon (PS), insbesondere Polyethersulfon (PES), auf oder bestehen sie daraus.

Vorteilhafterweise sind die Thermoplastfasern unverstreckt.

Zweckmäßigerweise ist der Mantel mit ferromagnetischen Nanopartikeln modifiziert. Mit anderen Worten ist der Mantel mit ferromagnetischen Nanopartikeln versehen.

Gemäß einer besonderen Ausführungsform der Erfindung sind die Verstärkungsfasern und die Thermoplastfasern homogen vermischt.

Bei dem Verfahren zur Herstellung von Faser-Preforms wird das Hybridgarn vorteilhafterweise beim oder nach dem Ablegen auf die Tragschicht gedrückt.

Der Erfindung liegt die überraschende Erkenntnis zugrunde, dass durch die spezielle Gestaltung der Hybridgarne eine ressourceneffiziente Prozesskette zur Herstellung von Hochleistungsfaserverbundbauteilen sogar für komplexe Geometrien realiserbar ist.

Weitere Merkmale und Vorteile der Erfindung ergeben sich aus den beigefügten Ansprüchen und der nachfolgenden Beschreibung, in der mehrere Ausführungsbeispiele anhand der schematischen Zeichnungen im Einzelnen erörtert werden. Dabei zeigen:
- Figur 1 bis 3: Querschnittsansichten von einzelnen Thermoplastfasern eines Hybridgarns gemäß besonderen Ausführungsformen der Erfindung;
- Figuren 4 bis 6: Querschnittsansichten von einer Vielzahl von Thermoplastfasern aus einem oder mehreren der in den Figuren 1 bis 3 gezeigten Thermoplastfasertypen von Hybridgarnen gemäß besonderen Ausführungsformen der Erfindung;
- Figuren 7 und 8: Querschnittsansichten von Hybridgarnen gemäß besonderen Ausführungsformen der Erfindung; und
- Figuren 9 und 10: eine Seitenansicht und eine Draufsicht zur Veranschaulichung eines Verfahrens zur Herstellung von Faser-Preforms gemäß besonderen Ausführungsformen der Erfindung.

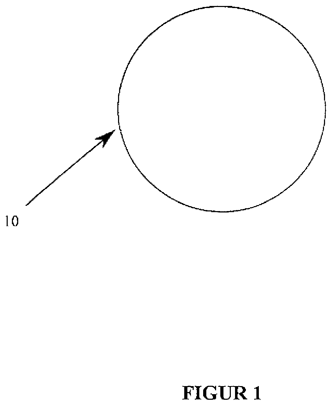

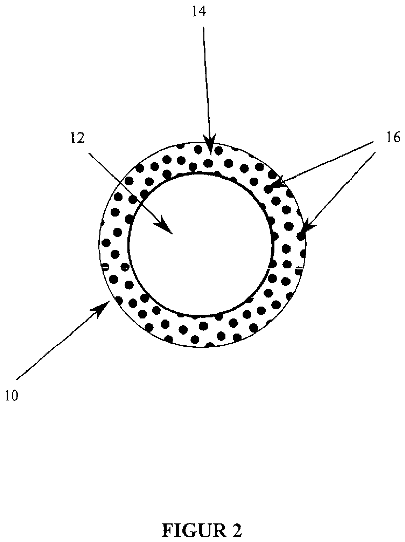

In Figur 1 ist eine Thermoplastfaser 10 gezeigt, die keine ferromagnetischen und/oder ferrimagnetischen Partikel enthält, während die in Figur 2 gezeigte Thermoplastfaser einen Kern 12 und einen den Kern umgebenden Mantel 14 aufweist, wobei der Kern 12 und der Mantel 14 idealerweise aus demselben Material bestehen, außer dass der Mantel 14 zusätzlich mit ferromagnetischen Partikeln, von denen nur einige durch 16 gekennzeichnet sind, vorzugsweise gleichmäßig, versetzt ist.

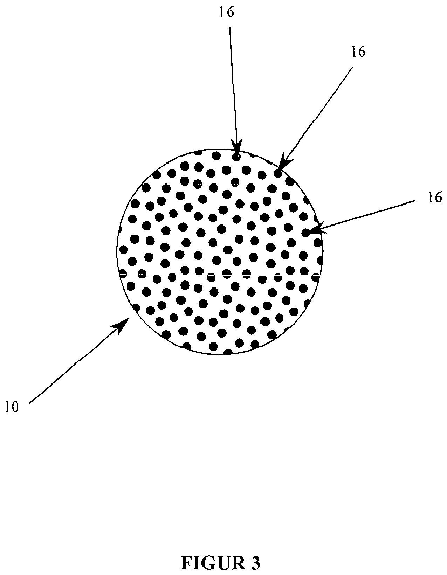

Die in Figur 3 gezeigte Thermplastfaser 10 ist gleichmäßig mit ferromagnetischen Partikeln, von denen nur einige durch 16 gekennzeichnet sind, versetzt.

Die ferromagnetischen Partikel sind in den Figuren 2 und 3 sphärisch dargestellt. Selbstverständlich können sie auch andere Gestalten aufweisen.

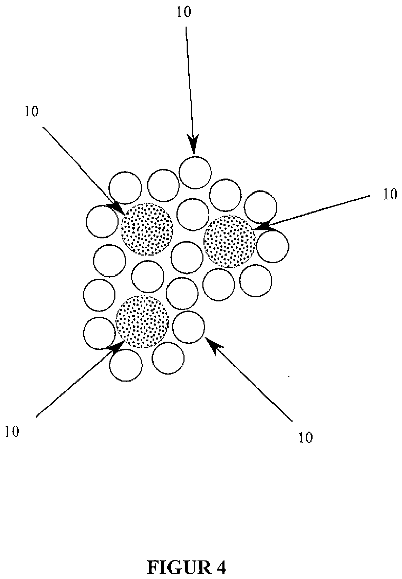

In Figur 4 ist eine Vielzahl von Thermoplastfasern 10 als ein Gemisch aus den in Figuren 1 und 3 gezeigten Thermoplastfasertypen dargestellt, wobei lediglich einige der Thermoplastfasern gekennzeichnet sind. Die Größenverhältnisse dienen nur der besseren Darstellung. Für eine homogene Durchmischung sind einheitliche Durchmesser ideal.

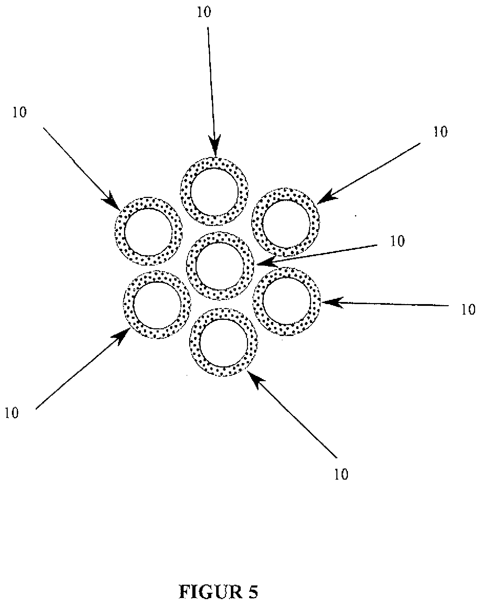

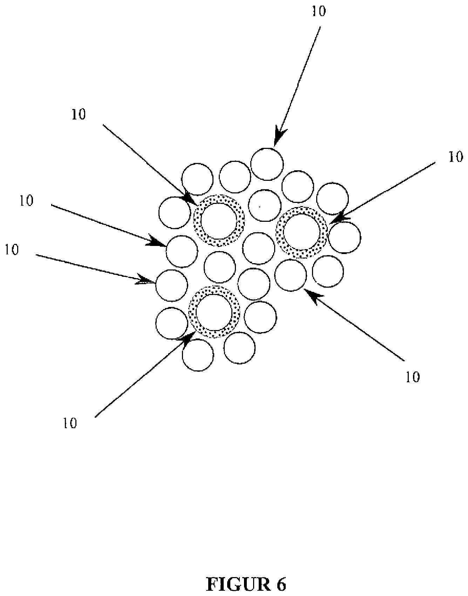

In Figur 5 ist eine Vielzahl von Thermoplastfasern 10 vom in Figur 2 gezeigten Typ dargestellt. Schließlich ergibt sich das in Figur 6 gezeigte Gemisch aus den in den Figuren 1 und 2 dargestellten Thermoplastfasertypen, wobei nur einige Thermoplastfasern mit 10 gekennzeichnet sind. Das in Figur 6 dargestellte Gemisch weist einen minimalen Partikelanteil (minimale oder besser reduzierte Nanopartikel-Konzentration: im Hybridgarn kommen nicht modifizierte und mantelmodifizierte Thermoplastfasern vor) (maximale oder besser hohe Nanopartikel-Konzentration: alle Thermoplastfasern sind über den Thermoplastfaserquerschnitt gleichmäßig modifiziert) auf.

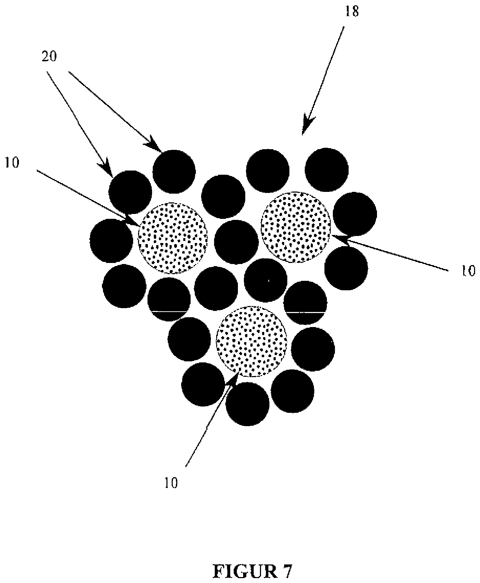

In Figur 7 ist nun ein Hybridgarn 18 aus Thermoplastfasern 10 vom in Figur 3 gezeigten Typ sowie Verstärkungsfasern 20, von denen nur einige gekennzeichnet sind, dargestellt.

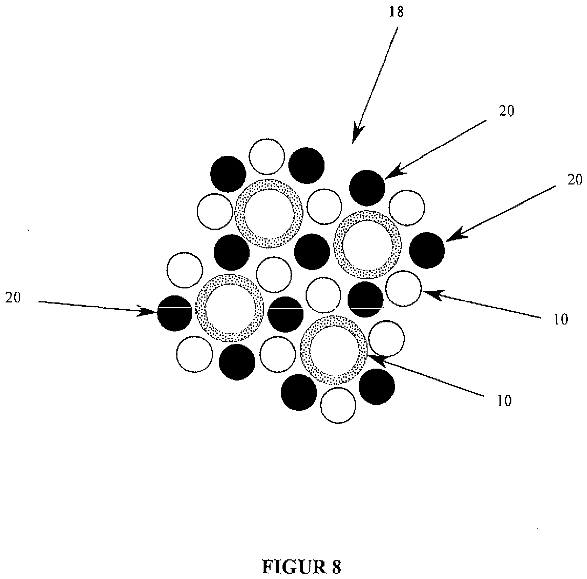

Das in Figur 8 dargestellte Hybridgarn 18 besteht im Prinzip aus der in Figur 6 dargestellten Vielzahl von Thermoplastfasern, von denen nur einige mit 10 gekennzeichnet sind, sowie aus Verstärkungsfasern 20, von denen ebenfalls nur einige gekennzeichnet sind.

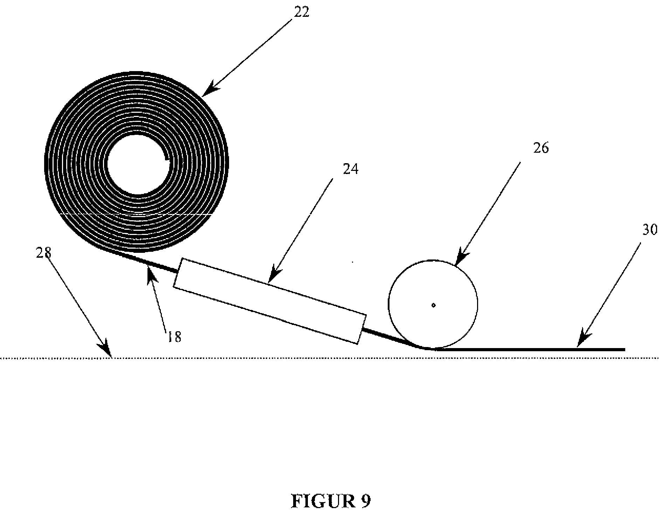

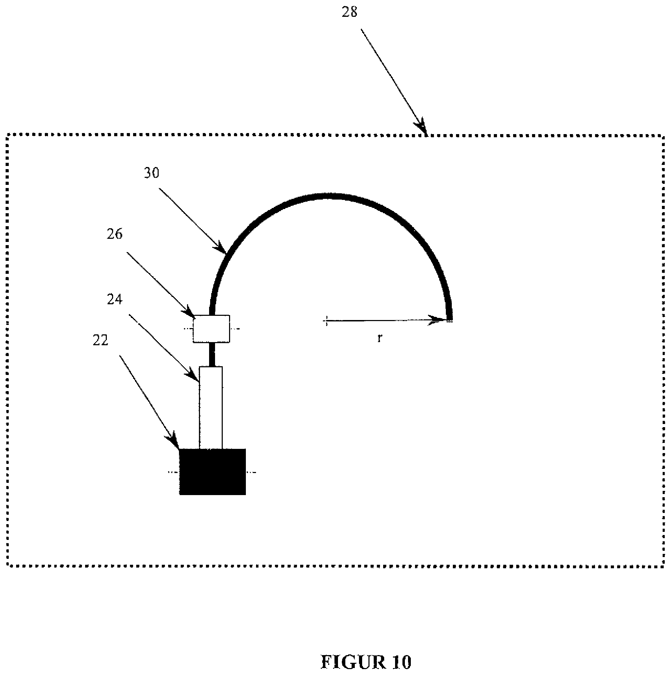

Die Figuren 9 und 10 zeigen, wie ein Hybridgarn 18 gemäß einer besonderen Ausführungsform der Erfindung, das auf eine Spule 22 gewickelt ist, von letzterer abgewickelt und durch eine magnetische Induktionsheizeinrichtung in Form einer Induktionsspule 24 geführt sowie nachfolgend mittels einer Andrückrolle 26, die gegebenenfalls gekühlt ist, auf einer Tragschicht 28 abgelegt und darauf gedrückt wird. Mit 30 soll das abgelegte und an der Tragschicht anhaftende Hybridgarn gekennzeichnet sein. Figur 10 zeigt die Bahnkurve mit einem Ablegeradius r in der Größenordnung von ca. 20 mm bis unendlich. Die Induktionsspule 24 kann eine kleine leistungsstarke Induktionsspule sein. Diese weist üblicherweise einen runden Durchlass auf. Im vorliegenden Fall kann das Hybridgarn 18 noch mit einem im Wesentlichen kreisförmigen Querschnitt durch die Induktionsspule 24 geführt werden. Dadurch ergeben sich sehr hohe Aufheizraten. Diese können im Mittel durchaus oberhalb von 100 K/s bis zum Erreichen des Schmelzbereiches liegen.

Gemäß einer besonderen Ausführungsform der Erfindung sind die Hybridgarne 18 aus funktionalisierten, das heißt mantelselektiv induktiv aufschmelzbaren, Mantel 14-Kern 12-Thermoplastfasern 10, vorzugsweise aus Polyetheretherketon (PEEK), und Verstärkungsfasern 20, vorzugsweise Kohlenstofffasern, hergestellt. Zur Herstellung eines Faser-Preforms mittels des vorangehend beschriebenen modifizierten TFP-Verfahrens wird der mit ferromagnetischen Partikeln 16, vorzugsweise Eisenoxide, wie MagSilica®, modifizierte Mantel 14 der Thermoplastfasern 10 induktiv aktiviert und schmilzt auf. Während der Vorfixierung agiert hierbei die aufgeschmolzene Mantelkomponente als Binder. Hierdurch kann im Gegensatz zum normalen TFP-Verfahren mit Stickkopf auf den Einsatz von Nähfäden verzichtet werden, der sonst zu Filamentschädigungen, Faserondulationen und Harznestern führt. Weiterführend besteht bei dem Verfahren keine Limitierung in der Lagenanzahl, da die Lagen aufeinander geklebt werden und nicht vernäht werden müssen. Die hohe Flexibilität des Hybridgarns ermöglicht des Weiteren sehr kleine Ablegeradien und ist somit dem Tow-Placement-Verfahren bei komplexen Bauteilgeometrien überlegen.

Aufgrund von Voruntersuchungen zur Mantel-Kern-Verteilung innerhalb der Bikomponenten- Thermoplastfasern ließ sich technisch ein Mantelvolumenanteil von 10 Vol.-% realisieren. Großtechnisch sind auch niedrigere Mantelanteile im Bereich von 1 % realisierbar, so dass der erforderliche Anteil an ferromagnetischen Partikeln im Bauteil unter 1 % liegen kann.

Die Prozesskette kann sich in folgende Teilschritte gliedern:

### Hybridgarnherstellung

In einem Bikomponenten-Schmelzspinnprozess wird sowohl für den Mantel als auch für den Kern der Thermoplastfaser der gleiche Thermoplast verwendet. Hierbei ist der Mantel mit ferromagnetischen Partikeln modifiziert. Beispielsweise über das Commingling-Verfahren, modifizierte Lufttexturiermaschinen oder Friktionsspinn können die Mantel-Kern-Thermoplastfasern und die Verstärkungsfasern in einem Verhältnis, das dem späteren Faservolumengehalt des Faserverbundbauteils entspricht, zu einem Hybridgarn homogen vermischt werden. Die Faserfeinheiten werden im Hinblick auf die Hybridgarn-Homogenität und der daraus resultierenden Faserverbundbauteilhomogenität abgestimmt.

### Preforming-Tow-Placement

Ein mit magnetischer Induktionsheiztechnik ausgestatteter Ablegekopf (nicht gezeigt) aktiviert über die ferromagnetischen Partikel thermisch den Mantel der Thermoplastfasern, so dass das Hybridgarn kraftflussgerecht auf einer 2D-Abwicklung einer Bauteilendkontur (Tragschicht) oder direkt auf der 3D-Bauteilkontur abgelegt und fixiert werden kann. Ondulationen der Verstärkungsfasern und Einschränkungen in der Lagenanzahl können in diesem Verfahren im Vergleich zur normalen TFP-Technologie umgangen werden.

Der Ablegekopf lässt sich sowohl an einem Roboterarm als auch an einer Portalanlage installieren.

Mit der beschriebenen Ablagetechnik ist es möglich, unterschiedliche Hybridgarne auf beliebigen zwei- und dreidimensionalen Bahnen abzulegen. Die Faserarchitektur kann somit optimal der späteren Faserverbundbauteilbelastung angepasst werden, um so das Werkstoffpotenzial voll auszunutzen. Durch Ablegen auf Endkontur wird das gesamte eingesetzte Material im Faserverbundbauteil verwendet. Durch diesen effizienten Werkstoffeinsatz können trotz teurer Ausgangsmaterialien Hochleistungsfaserverbundbauteile zu günstigen Preisen gefertigt werden. Diese Technologie eines Ablagekopfes lässt sich auch auf andere Verfahren, wie zum Beispiel dem Wickelverfahren, übertragen.

### Konsolidierung

Die dreidimensionale Formgebung und Konsolidierung kann nachfolgend in einem Thermoformprozess erfolgen.

Die Anlagentechnik ist gut anpassbar. Dies bietet Freiräume in der herstellbaren Bauteilgeometrie. Zudem eignet sich das Verfahren wegen des geringen Umrüstaufwands auch zur Fertigung von Kleinserien. Die Halbzeuge sind produktunspezifisch und somit für ein sehr breites Anwendungsspektrum einsetzbar.

Die gute Anpassbarkeit der Anlagentechnik an verschiedene Geometrien eröffnet auch Chancen für die wirtschaftliche Fertigung von variantenreichen Serien im Maschinenbau und in der Orthopädietechnik. Die Faserverbundbauteile werden aus einfachen und spezifischen Halbzeugen aufgebaut und weisen einen geringen Verschnitt auf. Sie sind endkonturgenau, mit Spritzgussteilen thermisch fügbar und benötigen keinen Korrosionsschutz.

Die dargestellte Prozesskette und die möglichen Produkte weisen zumindest in besonderen Ausführungsformen die folgenden Vorteile einzeln oder in Kombination auf:
- Die neue Fixierungsart des Hybridgarns ermöglicht im Vergleich zur TFP-Technologie das schädigungsfreie Ablegen von Verstärkungsfasern auch auf Bahnen mit kleinen Krümmungsradien (Ablegeradien) und für dicke Preforms.
- Im Vergleich zu bestehenden Tow-Placement-Anlagen können deutlich kleinere Inplane-Ablegeradien ohne Faserwelligkeiten verwirklicht werden.
- Außer dem sehr geringen Anteil von ferromagnetischen und/oder ferrimagnetischen Partikeln sind keine weiteren Hilfsmittel, wie niedrigschmelzende thermoplastische Binder, erforderlich, die je nach Einsatzgebiet des Materials zu reduzierenden Hot-Wet-Eigenschaften führen können.
- Werkstoffeigenschaften können über die maßgeschneiderte Ausrichtung der Verstärkungsfasern optimal an die Bauteilbelastungen angepasst werden.
- Durch den hohen Automatisierungsgrad der Prozesskette ist eine kundennahe Fertigung in Ländern mit vergleichsweise hohem Lohnniveau möglich. Eine hohe Prozesssicherheit ist gewährleistet.
- Mit Fertigung der Preforms auf Endkontur mittels des Tow-Placement-Verfahrens wird der Zuschnitt des textilen Flächenproduktes umgangen. Neben Kosten für die Schneideeinrichtungen und Personal wird dabei auch der sonst übliche Verschnitt deutlich reduziert. Qualitätseinbußen, welche sonst in Form von Faserondulationen beim Schneideprozess und der Handhabung biegeschlaffer Textilien hervorgerufen werden, kommen ebenfalls nicht zum Tragen.
- Die ausreichend hohe Steifigkeit des Faser-Preforms ermöglicht die Lagerung und den sicheren Transport. Die Fertigung der Preforms kann in der textilen Zulieferindustrie erfolgen. Damit wird die Auslastung von bauteilunspezifischen Tow-Placement-Anlagen sichergestellt und das jeweilige Expertenwissen der unterschiedlichen Wirtschaftzweige genutzt.
- Die kurzen Zykluszeiten ermöglichen die Umsetzung von Leichtbaukonzepten für ein breites Anwendungsfeld. Die neuen Produkte zeichnen sich dabei durch geringes Gewicht, erhöhte Leistungsfähigkeit und reduzierten Energieverbrauch im Betrieb aus.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Thermoplastfasern
- 12: Kern
- 14: Mantel
- 16: ferromagnetische Partikel
- 18: Hybridgarn
- 20: Verstärkungsfasern
- 22: Spule
- 24: Induktionsspule
- 26: Andrückrolle
- 28: Tragschicht
- 30: abgelegtes Hybridgarn

## Patentansprüche

1. Hybridgarn (18), insbesondere geeignet zur Thermofixierung von Faser-Preforms für, vorzugsweise endlosfaserverstärkte, Faserverbundbauteile, insbesondere Hochleistungsfaserverbundbauteile, umfassend eine Vielzahl von Verstärkungsfasern (20) aus Kohlenstoff oder Glas und eine Vielzahl von Thermoplastfasern (10), wobei zumindest einige der Vielzahl von Thermoplastfasern (10) zumindest anteilig ferro- und/oder ferrimagnetische Partikel (16), vorzugsweise im Nanometerbereich, umfassen.

2. Hybridgarn (18) nach Anspruch 1, **dadurch gekennzeichnet, dass** die Thermoplastfasern (10) jeweils einen Kern (12), der ein erstes Material umfasst oder daraus besteht, und einen den Kern (12) umgebenden Mantel (14), der ein zweites Material umfasst oder daraus besteht, umfassen.

3. Hybridgarn (18) nach Anspruch 2, **dadurch gekennzeichnet, dass** das erste Material und das zweite Material identisch sind.

4. Hybridgarn (18) nach Anspruch 2 oder 3, **dadurch gekennzeichnet, dass** die Partikel (16) im Mantel (14) angeordnet sind.

5. Hybridgarn (18) nach Anspruch 4, **dadurch gekennzeichnet, dass** der Mantel (14) mit ferromagnetischen Nanopartikeln versehen ist.

6. Hybridgarn (18) nach einem der vorangehenden Ansprüche, **dadurch gekennzeichnet, dass** die Thermoplastfasern (10) Polyetherketon, insbesondere Polyetheretherketon (PEEK), Polyphenylensulfid (PPS), Polyimid, insbesondere Polyetherimid (PEI), oder Polysulfon (PS), insbesondere Polyethersulfon (PES), aufweisen oder daraus bestehen.

7. Hybridgarn (18) nach einem der vorangehenden Ansprüche, **dadurch gekennzeichnet, dass** die Thermoplastfasem (10) unverstreckt sind.

8. Hybridgarn (18) nach einem der vorangehenden Ansprüche, **dadurch gekennzeichnet, dass** die Verstärkungsfasern (20) und die Thermoplastfasern (10) homogen vermischt sind.

9. Verfahren zur Herstellung von Faser-Preforms für, vorzugsweise endlosfaserverstärkte, Faserverbundbauteile, insbesondere Hochleistungsfaserverbundbauteile, umfassend:
kontinuierliches Zuführen eines Hybridgarns (18) nach einem der vorangehenden Ansprüche unter gleichzeitigem Erwärmen desselben in kontinuierlichem Durch- oder
Vorbeilauf durch eine magnetische Induktionsheizeinrichtung (24) oder an derselben und
nachfolgendes Ablegen des Hybridgarns (18) in einer beliebigen Bahnkurve auf einer, vorzugsweise zweidimensionalen, Tragschicht (28) sowie Fixieren des Hybridgarns (18) durch Erstarrenlassen.

10. Verfahren nach Anspruch 9, **dadurch gekennzeichnet, dass** das Hybridgarn (18) beim oder nach dem Ablegen auf die Tragschicht (28) gedrückt wird.

11. Verfahren zur Herstellung von, vorzugsweise endlosfaserverstärkten, Faserverbundbauteilen, insbesondere Hochleistungsverbundbauteilen, umfassend:
- kontinuierliches Zuführen eines Hybridgarns (18) nach einem der Ansprüche 1 bis 8 unter gleichzeitigem Erwärmen desselben in kontinuierlichem Durch- oder Vorbeilauf durch eine magnetische Induktionsheizeinrichtung (24) oder an derselben
und nachfolgendes Ablegen des Hybridgarns (18) in einer beliebigen Bahnkurve auf einer, vorzugsweise zweidimensionalen, Tragschicht (28) sowie Fixieren des Hybridgarns (18) durch Erstarrenlassen und
- Thermoformen des erzeugten Faser-Preforms zur Herstellung eines dreidimensional geformten Faserverbundbauteils.

## Claims

1. Hybrid yarn (18), especially suitable for heat-setting of fibre preforms for, preferably filament-reinforced, fibre composite component parts, especially high performance fibre composite component parts, comprising a multiplicity of reinforcing fibres (20) in carbon or glass and a multiplicity of thermoplastic fibres (10), wherein at least some of the multiplicity of thermoplastic fibres (10) comprise at least a proportion of ferro- and/or ferrimagnetic particles (16), preferably in the nanometre range.

2. Hybrid yarn (18) according to Claim 1, **characterized in that** the thermoplastic fibres (10) each comprise a core (12), comprising or consisting of a first material, and a sheath (14) surrounding the core (12) and comprising or consisting of a second material.

3. Hybrid yarn (18) according to Claim 2, **characterized in that** the first material and the second material are identical.

4. Hybrid yarn (18) according to Claim 2 or 3, **characterized in that** the particles (16) are arranged in the sheath (14).

5. Hybrid yarn (18) according to Claim 4, **characterized in that** the sheath (14) is provided ferromagnetic nanoparticles.

6. Hybrid yarn (18) according to any preceding claim, **characterized in that** the thermoplastic fibres (10) include or consist of polyether ketone, in particular polyether ether ketone (PEEK), polyphenylene sulphide (PPS), polyimide, especially polyether imide (PEI), or polysulphone (PS), especially polyether sulphone (PES).

7. Hybrid yarn (18) according to any preceding claim, **characterized in that** the thermoplastic fibres (10) are undrawn.

8. Hybrid yarn (18) according to any preceding claim, **characterized in that** the reinforcing fibres (20) and the thermoplastic fibres (10) form a homogeneous blend.

9. Process for producing fibre preforms for, preferably, filament-reinforced fibre composite component parts, especially high performance fibre composite component parts, comprising:
continuously feeding a hybrid yarn (18) according to any preceding claim with simultaneous heating thereof through or past a magnetic induction heating means (24) in a continuous manner and
subsequently laying down the hybrid yarn (18) in any desired trajectory on a, preferably two-dimensional, supporting layer (28) and also setting the hybrid yarn (18) by allowing it to solidify.

10. Process according to Claim 9, **characterized in that** the hybrid yarn (18) is pressed onto the supporting layer (28) during or after the step of laying down.

11. Process for producing, preferably, filament-reinforced fibre composite component parts, especially high performance fibre composite component parts, comprising:
- continuously feeding a hybrid yarn (18) according to any of Claims 1 to 8 with simultaneous heating thereof through or past a magnetic induction heating means (24) in a continuous manner and
- subsequently laying down the hybrid yarn (18) in any desired trajectory on a, preferably two-dimensional, supporting layer (28) and also setting the hybrid yarn (18) by allowing it to solidify, and
- thermoforming the fibre preform obtained to produce a three-dimensionally shaped fibre composite component part.

## Revendications

1. Fil hybride (18), en particulier approprié au thermofixage de préformes de fibres pour des éléments de construction composites renforcés avec des fibres, de préférence renforcés avec des fibres continues, en particulier des éléments de construction composites renforcés avec des fibres haute performance, comprenant une pluralité de fibres de renfort (20) à base de carbone ou de verre et une pluralité de fibres thermoplastiques (10), au moins certaines de la pluralité de fibres thermoplastiques (10) comprenant des particules (16) au moins en partie ferromagnétiques et/ou ferrimagnétiques, de préférence à l'échelle nanométrique.

2. Fil hybride (18) selon la revendication 1, **caractérisé en ce que** les fibres thermoplastiques (10) comprennent chacune une âme (12) qui comprend ou consiste en un premier matériau, et une enveloppe (14) entourant l'âme (12), qui comprend ou consiste en un second matériau.

3. Fil hybride (18) selon la revendication 2, **caractérisé en ce que** le premier matériau et le second matériau sont identiques.

4. Fil hybride (18) selon la revendication 2 ou 3, **caractérisé en ce que** les particules (16) sont disposées dans l'enveloppe (14).

5. Fil hybride (18) selon la revendication 4, **caractérisé en ce que** l'enveloppe (14) est munie de nanoparticules ferromagnétiques.

6. Fil hybride (18) selon l'une quelconque des revendications précédentes, **caractérisé en ce que** les fibres thermoplastiques (10) comportent ou consistent en de la polyéthércétone, en particulier de la polyétheréthercétone (PEEK), du poly(sulfure de phénylène) (PPS), du polyimide, en particulier du polyétherimide (PEI) ou de la polysulfone (PS), en particulier de la polyéthersulfone (PES).

7. Fil hybride (18) selon l'une quelconque des revendications précédentes, **caractérisé en ce que** les fibres thermoplastiques (10) sont non étirées.

8. Fil hybride (18) selon l'une quelconque des revendications précédentes, **caractérisé en ce que** les fibres de renfort (20) et les fibres thermoplastiques (10) sont mélangées de façon homogène.

9. Procédé pour la production de préformes de fibres pour des éléments de construction composites renforcés avec des fibres, de préférence renforcés avec des fibres continues, en particulier des éléments de construction composites renforcés avec des fibres haute performance, comprenant :
l'envoi en continu d'un fil hybride (18) selon l'une quelconque des revendications précédentes, avec chauffage simultané de celui-ci, en passage devant ou traversant continu, à travers un dispositif de chauffage par induction magnétique (24) ou sur celui-ci et dépôt subséquent du fil hybride (18) en une trajectoire quelconque sur une couche porteuse (28) de préférence bidimensionnelle, ainsi que le fixage du fil hybride (18) par abandon à la solidification.

10. Procédé selon la revendication 9, **caractérisé en ce que** le fil hybride (18) est pressé lors du ou après le dépôt sur la couche porteuse (28).

11. Procédé pour la production d'éléments de construction composites renforcés avec des fibres, de préférence renforcés avec des fibres continues, en particulier d'éléments de construction composites renforcés avec des fibres haute performance, comprenant :
- l'envoi en continu d'un fil hybride (18) selon l'une quelconque des revendications 1 à 8, avec chauffage simultané de celui-ci, en passage devant ou traversant continu, à travers un dispositif de chauffage par induction magnétique (24) ou sur celui-ci
et dépôt subséquent du fil hybride (18) en une trajectoire quelconque sur une couche porteuse (28) de préférence bidimensionnelle, ainsi que le fixage du fil hybride (18) par abandon à la solidification et
- le thermoformage de la préforme de fibres produite, pour la production d'un élément de construction composite renforcé avec des fibres, mis en forme tridimensionnelle.
